# EUROPÄISCHE PATENTSCHRIFT

(11) **EP 2 274 970 B1**
(45) Veröffentlichungstag und Bekanntmachung des Hinweises auf die Patenterteilung: **12.06.2013**
(21) Anmeldenummer: 10169708.4
(22) Anmeldetag: 15.07.2010
(51) Int. Cl.: A01G 9/22

(54) **Seilrollenvorrichtung**
Rope roller device
Dispositif d'enroulement de câble

(30) Priorität: 15.07.2009 DE 102009033412
(43) Veröffentlichungstag der Anmeldung: 19.01.2011
(73) Patentinhaber: TGU GmbH & Co. KG, 46268 Greven (DE)
(72) Erfinder: Reimann, Winfried, 48268, Greven (DE)
(74) Vertreter: Hoffmeister, Helmut

(56) Entgegenhaltungen:
- DE-U1- 8 909 537
- DE-U1- 29 822 784
- DE-U1- 29 824 480
- JP-U- 57 082 157

## Beschreibung

### Seilrollenvorrichtung

Die Erfindung betrifft eine Seilrollenvorrichtung, insbesondere für ein Zugseil eines Energie- oder Schattierschirms oder einer Verdunkelungsanlage in einem Gewächshaus, mit einer Seiltrommel zur Aufnahme und/oder zum Umlenken eines Seils und mit einer Befestigungseinrichtung zur Befestigung der Seiltrommel an einer Welle. Ferner betrifft die Erfindung eine Verbindungsanordnung mit einer Welle und einer auf der Welle befestigten Seilrollenvorrichtung. Schließlich betrifft die Erfindung ein Verfahren zur Herstellung einer Verbindungsanordnung enthaltend eine Welle und eine Seilrollenvorrichtung.

Es ist bekannt, dass bei Gebäuden mit großflächiger Verglasung, insbesondere bei Treib- und Gewächshäusern, aber auch bei modernen Bürogebäuden, die Konstanthaltung des Innenklimas am Tage bei starker Sonneneinstrahlung wie auch in der Nacht bei Wärmeabstrahlung in die Umgebung nur mit apparativ und energetisch aufwendiger Klimatisierungstechnik zu erreichen ist. Um am Tage die Aufheizung eines Gewächshauses durch die Sonneneinstrahlung zu vermeiden oder zumindest konstant zu halten und/oder während der Nacht eine zu starke Auskühlung des Gewächshauses zu vermeiden, besteht der Bedarf, die Sonneneinstrahlung am Tage sowie die Wärmeabstrahlung nach außen in der Nacht gering zu halten oder doch zumindest präzise zu steuern. Eine einfache Möglichkeit hierzu besteht darin, die Glasflächen mit sogenannten Energieschirmen oder Schattierschirmen bzw. Verdunkelungsschirmen auszukleiden. Diese werden zur Minimieren bzw. zur Steuerung des Wärmeaustausches entlang der Glasflächen ausgebreitet und, falls ein Wärmeaustausch mit der Umgebung gewünscht wird, wieder eingezogen.

Das Bewegen der Energie- oder Schattierschirme entlang der Glasflächen erfolgt dabei beispielsweise über Zugseile, die als Endlosschlaufe zwischen zwei im Gewächshaus angeordneten Profilträgern verlaufen, wobei an einem der Profilträger eine motorbetriebene Seiltrommel zum Antrieb der Zugseile angeordnet ist, während an dem anderen Profilträger gegenüber der Seiltrommel eine Umlenkrolle vorgesehen ist.

Um die Seiltrommeln in Rotation versetzen zu können, sind diese auf einer Welle gelagert. JP 57082157 U offenbart eine Seilrollenvorrichtung mit den Merkmalen des Oberbegriffs des Anspruchs 1. Die Montage und Positionierung der Seiltrommel auf der zugehörigen Welle erfordert aber bisher einen relativ hohen Aufwand.

Es ist daher die Aufgabe der vorliegenden Erfindung, eine Seilrollenvorrichtung zu schaffen, die eine einfachere Montage gewährleistet.

Die zuvor hergeleitete und aufgezeigte Aufgabe wird gemäß einer ersten Lehre der vorliegenden Erfindung bei einer Seilrollenvorrichtung der eingangs genannten Art dadurch gelöst, dass die Befestigungseinrichtung je Teilschale an ihren beiden Seiten je ein Befestigungseinrichtungsteil aufweist, dass jedes Befestigungseinrichtungsteil mit einer der Teilschalen verbunden ist, dass an jeder Seite der Seiltrommel mindestens zwei der Befestigungseinrichtungsteile im zusammengesetzten Zustand der Teilschalen miteinander verbunden sind und dass die Teilschalen durch die Verbindung zwischen den Befestigungseinrichtungsteilen lösbar miteinander verbunden sind.

Der zuvor genannte Aufbau einer Seilrollenvorrichtung, insbesondere die Aufteilung in mehrere Teilschalen mit zugehörigen Befestigungseinrichtungsteilen, erlaubt es auf einfache Weise, eine Seiltrommel an nahezu beliebiger Stelle an einer Welle zu positionieren und dort drehfest zu fixieren. Die erfindungsgemäß vorgesehene mehrteilige Seiltrommel kann zunächst auf eine beispielsweise montierte Welle montiert und darauf frei positioniert werden. Dazu ist die aus den mehreren Teilschalen bestehende Seiltrommel bevorzugt so ausgebildet, dass die von den Teilschalen im zusammengesetzten Zustand gebildete Öffnung zum Hindurchführen der Welle so groß ist, dass die Seiltrommel im zusammengesetzten Zustand zunächst noch auf der Welle in axialer Richtung verschoben werden kann. Vorzugsweise erfolgt die endgültige Arretierung, das heißt die axiale Fixierung, erst dann, wenn sich die Seiltrommel, insbesondere nach einem axialen Verschieben derselben auf der Welle, in der gewünschten Position relativ zur Welle befindet. Besagte Arretierung wird im Weiteren noch näher erläutert.

Zunächst sei darauf hingewiesen, dass die an jeder Seite der Seiltrommel bzw. der Teilschalen vorhandenen und miteinander verbundenen Befestigungseinrichtungsteile vorzugsweise kraftschlüssig miteinander verbunden sind. Grundsätzlich ist auch eine formschlüssige Verbindung der jeweils miteinander verbundenen Befestigungseinrichtungsteile denkbar.

Gemäß einer Ausgestaltung der erfindungsgemäßen Seilrollenvorrichtung kann vorgesehen sein, dass die mehreren Teilschalen zwei Halbschalen sind. In diesem Fall ist es denkbar, dass die Befestigungseinrichtung an jeder Seite der Seiltrommel zwei Befestigungseinrichtungsteile aufweist, wobei jedes Befestigungseinrichtungsteil mit einer der Halbschalen verbunden ist. Eine aus Halbschalen bestehende Seiltrommel bzw. eine unter Verwendung von Halbschalen gefertigte Seilrollenvorrichtung ist auf besonders einfache Weise zusammenzusetzen und dadurch an einer Welle befestigbar. Neben einem vereinfachten Zusammenbau ist auch die Herstellung entsprechender Halbschalen relativ einfach.

Gemäß einer weiteren Ausgestaltung der erfindungsgemäßen Seilrollenvorrichtung ist an jeder Seite der Seiltrommel eines der Befestigungseinrichtungsteile ein Befestigungsbügel. Mit einem Bügel ist ein Bauteil gemeint, welches eine gebogene oder bügelförmige Form hat und dadurch geeignet ist, die Welle zumindest teilweise zu umgreifen. Der Befestigungsbügel hat dabei insbesondere eine Innenweite, die das Hindurchführen einer Welle erlaubt, die auch durch die Öffnung hindurchgeführt werden kann, die von den Teilschalen im zusammengesetzten Zustand gebildet wird. Mit anderen Worten ist die Innenweite so gewählt, dass die Welle sowohl durch die Öffnung, die von den Teilschalen gebildet wird, als auch durch die Öffnung, die von den jeweiligen Befestigungseinrichtungsteilen gebildet wird, hindurchführbar ist. Wie gesagt ist nach dem Zusammenbau die Seilrollenvorrichtung auf der Welle vorzugsweise noch verschiebbar.

Je Befestigungsbügel kann dann ein damit korrespondierendes Gegenstück vorgesehen sein, das ein anderes der Befestigungseinrichtungsteile bildet. Das korrespondierende Gegenstück wirkt dann mit dem Befestigungsbügel haltend zusammen, bevorzugt derart, dass die Welle von der aus Befestigungsbügel und korrespondierendem Gegenstück gebildeten Einheit umschlossen wird. Hierüber erfolgt eine radiale Fixierung der Seiltrommel an der Welle.

Das haltende Zusammenwirken von Befestigungsbügel und korrespondierendem Gegenstück kann dadurch erreicht werden, dass an jeder Seite der Seilrolle das den Befestigungsbügel bildende Befestigungseinrichtungsteil und das das korrespondierende Gegenstück bildende andere Befestigungseinrichtungsteil durch eine Verschraubung und/oder einen Bolzen zusammengehalten werden.

Alternativ zum vorangehend beschriebenen Aufbau der Befestigungseinrichtung, bei der die Befestigungseinrichtungsteile sich selbst, das heißt ohne zusätzliche Hilfsmittel, halten bzw. selbst miteinander haltend zusammenwirken, ist gemäß einer anderen Ausgestaltung der erfindungsgemäßen Seilrollenvorrichtung auch denkbar, dass, insbesondere an jeder Seite der Seilrolle, die Befestigungseinrichtung einen Haltebügel und eine Gegenplatte aufweist, wobei der Haltebügel und die Gegenplatte die zusammengesetzten Befestigungseinrichtungsteile, insbesondere kraftschlüssig, zusammenhalten. Dabei kann vorgesehen sein, dass die Gegenplatte am Haltebügel angeschraubt ist, der Haltebügel also ein mit einer Mutter zusammenwirkendes Gewinde an jedem Bügelende hat. Damit der Haltebügel optimal auf den Befestigungseinrichtungsteilen hält und gegebenenfalls einen geeigneten Kraftschluss aufbauen kann, ist ferner denkbar, dass in und/oder auf den Befestigungseinrichtungsteilen mindestens ein Vorsprung und/oder mindestens eine Vertiefung, insbesondere eine Nut, vorgesehen ist, die den Haltebügel und/oder die Gegenplatte aufnimmt.

Gemäß noch einer weiteren Ausgestaltung der erfindungsgemäßen Seilrollenvorrichtung bilden die jeweilige Teilschale, beispielsweise die jeweilige Halbschale, und das damit verbundene Befestigungseinrichtungsteil zusammen ein einstückiges Bauteil. Insbesondere haben dabei mehrere, insbesondere zwei, Bauteile eine identische Form und sind insbesondere mit derselben Gussform hergestellt. Dies führt zu einer vereinfachten Herstellung der Teilschalen, was letztlich auch den Montageaufwand bei der Herstellung einer Verbindungsanordnung enthaltend eine Welle und eine Seilrollenvorrichtung vereinfacht.

Gemäß wiederum einer weiteren Ausgestaltung der erfindungsgemäßen Seilrollenvorrichtung weist mindestens eines der Befestigungseinrichtungsteile, insbesondere an jeder Seite der Seiltrommel mindestens eines der Befestigungseinrichtungsteile, ein Arretierungsmittel zur axialen Fixierung der Seilrollenvorrichtung an der Welle auf. Ein solches Arretierungsmittel kann eine Schraube, insbesondere Schneidringschraube, sein, die sich vorzugsweise in radialer Richtung, das heißt zur Mittelachse der Welle hin, erstreckt. Mit einem solchen Arretierungsmittel kann, nachdem die zusammengesetzte Seiltrommel in der gewünschten Position auf der Welle ist, die Seiltrommel drehfest und insbesondere kraftschlüssig mit der Welle verbunden werden.

Die Aufgabe wird ferner gelöst durch eine Verbindungsanordnung mit einer Welle, insbesondere einer angetriebenen Welle, und mit einer auf der Welle befestigten Seilrollenvorrichtung wie sie zuvor beschrieben wurde.

Schließlich wird die Aufgabe gelöst durch ein Verfahren zur Herstellung einer Verbindungsanordnung enthaltend eine Welle und eine Seilrollenvorrichtung, insbesondere eine Seilrollenvorrichtung, wie sie zuvor beschrieben wurde, wobei nacheinander die folgenden Schritte durchgeführt werden:
- Bereitstellen einer Welle, insbesondere einer angetriebenen Welle,
- Platzieren mehrerer Teilschalen mit jeweils einem Befestigungseinrichtungsteil an jeder ihrer beiden Seiten um die Welle,
- Zusammensetzen der Teilschalen zu einer Seiltrommel,
- lösbares Verbinden der Teilschalen miteinander, indem zwischen den Befestigungseinrichtungsteilen an jeder Seite der Seiltrommel eine, insbesondere kraftschlüssige, Verbindung erzeugt wird, und dadurch Bilden einer Seilrollenvorrichtung,
- gegebenenfalls axiales Ausrichten (Positionieren) der Seilrollenvorrichtung relativ zur Welle,
- axiales Fixieren der Seilrollenvorrichtung an der Welle, indem eine, insbesondere form- und/oder kraftschlüssige, Verbindung zwischen einem Arretierungsmittel der Befestigungseinrichtung, die von den Befestigungseinrichtungsteilen gebildet wird, und der Welle erzeugt wird.

Die zuvor genannte Verbindungsanordnung und das entsprechende Herstellungsverfahren gewährleisten ebenfalls eine einfache Montage einer Seilrollenvorrichtung, insbesondere bedingt durch die Aufteilung in mehrere Teilschalen mit zugehörigen Befestigungseinrichtungsteilen. Die erfindungsgemäß vorgesehene mehrteilige Seiltrommel kann zunächst in einem ersten Schritt auf eine Welle montiert und gegebenenfalls darauf frei positioniert werden. Vorzugsweise erfolgt dann in einem weiteren Schritt eine endgültige Arretierung, wenn sich die Seiltrommel, insbesondere nach einem axialen Verschieben derselben auf der Welle, in der gewünschten Position relativ zur Welle befindet.

Es gibt nun eine Vielzahl von Möglichkeiten, die erfindungsgemäße Seilrollenvorrichtung, die erfindungsgemäße Verbindungsanordnung und das erfindungsgemäße Verfahren auszugestalten und weiterzubilden. Hierzu sei einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: eine perspektivische Ansicht einer Verbindungsanordnung gemäß der vorliegenden Erfindung,
- Fig. 2: eine dreidimensionale schematische Schnittansicht der Seilrollenvorrichtung aus Fig. 1,
- Fig. 3: eine schematische Draufsicht auf den Schnitt gemäß Fig. 2 und
- Fig. 4a,b: Ansichten eines alternativen Ausführungsbeispiels.

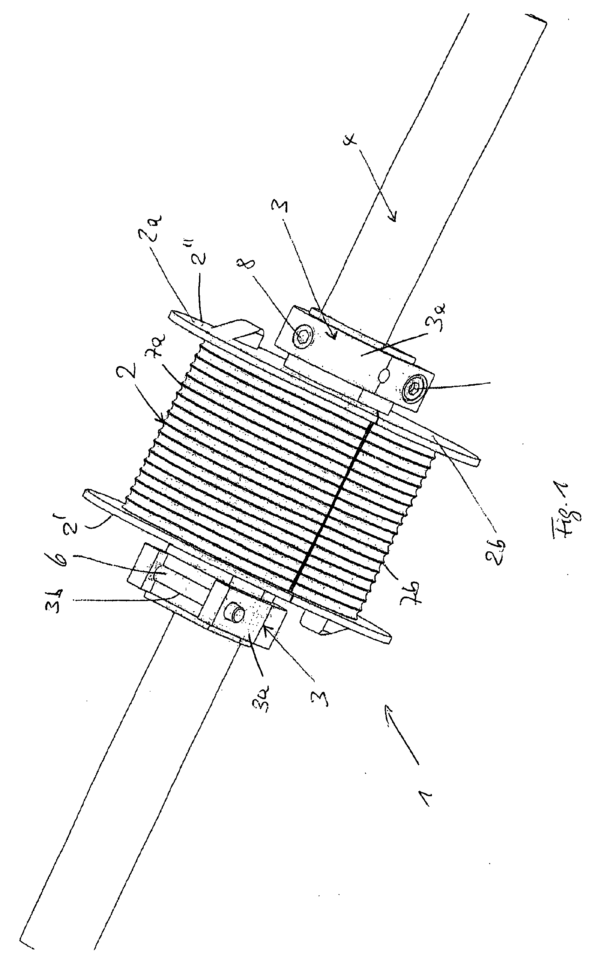

In den Figuren 1 bis 3 ist als eines von vielen möglichen Ausführungsbeispielen eine Seilrollenvorrichtung 1 dargestellt, welche auf einer angetriebenen Welle 4 drehfest befestigt ist und dazu dient, mit einem Zugseil eines Energie- oder Schattierschirms oder einer Verdunkelungsanlage in einem Gewächshaus zusammenzuwirken.

Die Seilrollenvorrichtung 1 weist eine Seiltrommel 2 zur Aufnahme und zum Umlenken eines Seils (nicht dargestellt) sowie eine Befestigungseinrichtung 3 zur Befestigung der Seiltrommel 2 an der Welle 4 auf.

Die Seiltrommel 2 besteht aus mehreren Halbschalen 2a, 2b, wobei die Halbschalen 2a, 2b im zusammengesetzten Zustand eine Öffnung 5 zum Hindurchführen der Welle 4 ausbilden.

Die Befestigungseinrichtung 3 weist je Halbschale 2a, 2b an ihren beiden Seiten 2', 2" je ein

Befestigungseinrichtungsteil 3a, 3b auf, wobei jedes Befestigungseinrichtungsteil 3a, 3b mit einer der Halbschalen 2a, 2b verbunden ist.

An jeder Seite 2', 2" der Seiltrommel 2 sind zwei der Befestigungseinrichtungsteile 3a, 3b im zusammengesetzten Zustand der Halbschalen 2a, 2b kraftschlüssig miteinander verbunden, wobei die Halbschalen 2a, 2b durch die kraftschlüssige Verbindung zwischen den Befestigungseinrichtungsteilen 3a, 3b lösbar miteinander verbunden sind.

Die Befestigungseinrichtung 3 ist wie folgt aufgebaut. An jeder Seite der Seiltrommel 2 ist eines der Befestigungseinrichtungsteile 3a, 3b als Befestigungsbügel 3a ausgebildet, der eine Innenweite hat, die das Hindurchführen der Welle 4 erlaubt. Je Befestigungsbügel 3a ist ein damit korrespondierendes Gegenstück 3b vorgesehen, das das andere der Befestigungseinrichtungsteile 3a, 3b bildet. Befestigungsbügel 3a und Gegenstück 3b wirken haltend zusammen und umschließen die Welle 4 im bestimmungsgemäß zusammengesetzten Zustand derart, dass eine radiale Fixierung der Seilrollenvorrichtung 1 erfolgt. Auch im zusammengebauten Zustand ist die Seilrollenvorrichtung 1 nach wie vor in axialer Richtung verschiebbar. An jeder Seite 2', 2" der Seiltrommel 2 werden der Befestigungsbügel 3a und das Gegenstück 3b durch eine bolzenförmige Verschraubung zusammengehalten.

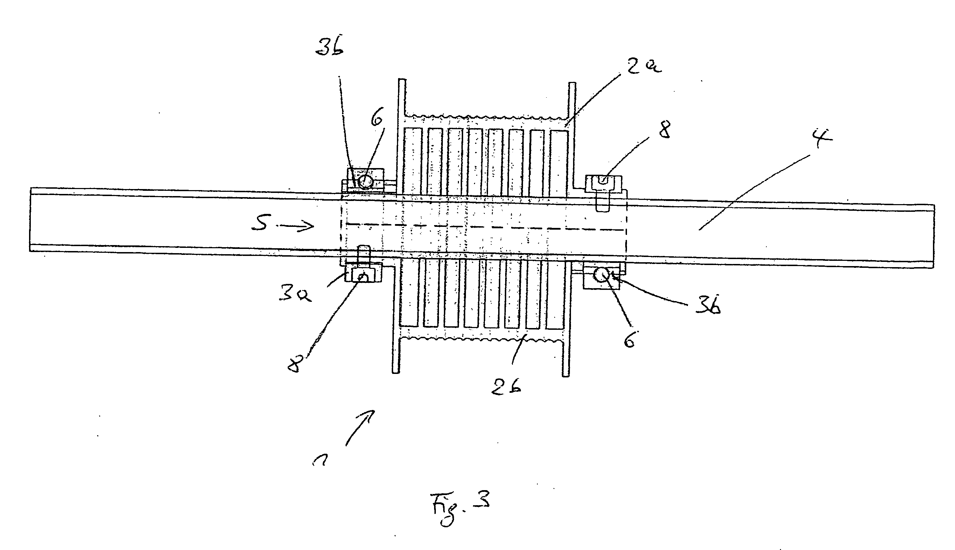

Wie insbesondere Fig. 3 zeigt, bilden die jeweilige Teilschale 2a, 2b und das damit verbundene Befestigungseinrichtungsteil 3a, 3b zusammen ein einstückiges Bauteil 7a, 7b. Im vorliegenden Fall sind zwei solche Bauteile 7a, 7b vorgesehen, wobei beide Bauteile eine identische Form haben und mit derselben Gussform hergestellt sind. Indem die Bauteile um 180° gegeneinander verdreht zusammengeführt werden, wird erreicht, dass an jeder Seite 2', 2" jeweils ein Befestigungsbügel 3a mit einem korrespondierenden Gegenstück 3b zusammenwirken kann.

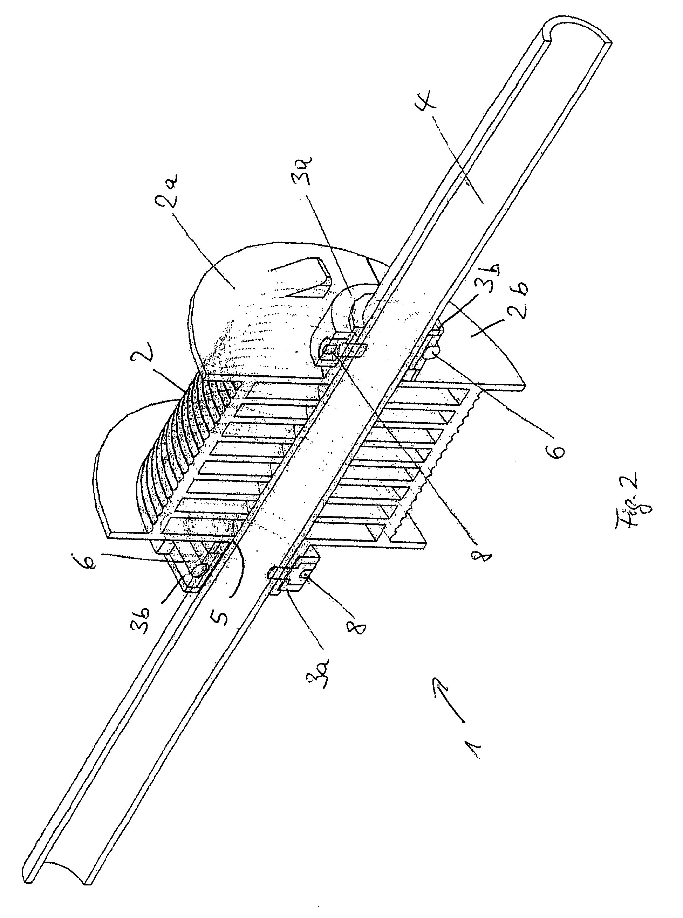

Nachdem die Seilrollenvorrichtung 1 auf der Welle 4 durch ein axiales Verschieben ausgerichtet, das heißt positioniert, worden ist, kann die Seilrollenvorrichtung 1 durch ein Arretierungsmittel 8 in Form einer Schneidringschraube an der Welle 4 axial fixiert werden. Wie die schematischen Schnitte in den Figuren 2 und 3 zeigen, erstreckt sich die Schneidringschraube 8 in radialer Richtung, das heißt zur Mittelachse der Welle 4 hin.

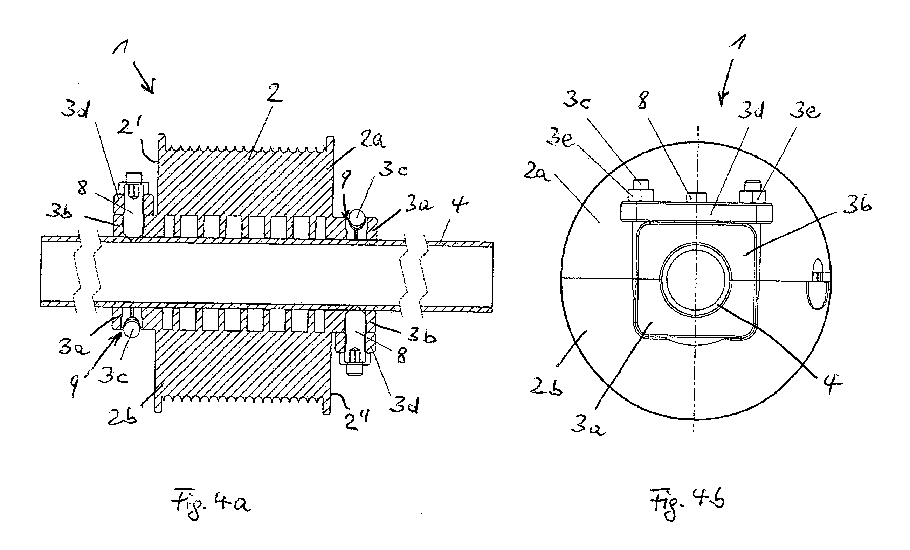

Die Figuren 4a) (Schnittansicht) und 4b) (stirnseitige Ansicht) zeigen eine ähnlich aufgebaute Seilrollenvorrichtung 1, wobei sich jedoch der Aufbau der Befestigungseinrichtung 3 unterscheidet. So ist hier vorgesehen, dass an jeder Seite 2',2" der Seilrolle 2 die Befestigungseinrichtung 3 zusätzlich noch als Hilfmittel zum Zusammenhalten der Befestigungseinrichtungsteile 3a,3b einen Haltebügel 3c und eine Gegenplatte 3d aufweist. Dabei ist die Gegenplatte 3d am Haltebügel 3c mittels Muttern 3e angeschraubt. Ferner ist in den Befestigungseinrichtungsteilen 3a,3b eine umlaufende Vertiefung (9) in Form einer Nut (9) vorgesehen, die den Haltebügel 3c und aufnimmt.

Die zuvor anhand der Figuren 1 bis 4 beschriebenen Verbindungsanordnungen aus Seilrollenvorrichtung 1 und Welle 4 werden beispielsweise hergestellt durch die folgenden Schritte:
- Bereitstellen einer angetriebenen Welle 4,
- Platzieren mehrerer Teilschalen 2a, 2b mit jeweils einem Befestigungseinrichtungsteil 3a, 3b an jeder ihrer beiden Seiten 2', 2" um die Welle 4,
- Zusammensetzen der Teilschalen 2a, 2b zu einer Seiltrommel 2,
- lösbares Verbinden der Teilschalen 2a, 2b miteinander, indem zwischen den Befestigungseinrichtungsteilen 3a, 3b an jeder Seite 2', 2" der Seiltrommel 2 eine kraftschlüssige Verbindung erzeugt wird, und dadurch Bilden einer Seilrollenvorrichtung 1,
- axiales Ausrichten der Seilrollenvorrichtung 1 relativ zur Welle 4,
- axiales Fixieren der Seilrollenvorrichtung 1 an der Welle 4, indem eine kraftschlüssige Verbindung zwischen einem Arretierungsmittel 8 der Befestigungseinrichtung 3, die von den Befestigungseinrichtungsteilen 3a, 3b gebildet wird, und der Welle 4 erzeugt wird.

## Patentansprüche

1. Seilrollenvorrichtung (1), insbesondere für ein Zugseil eines Energie- oder Schattierschirms oder einer Verdunkelungsanlage in einem Gewächshaus,
- mit einer Seiltrommel (2) zur Aufnahme und/oder zum Umlenken eines Seils und
- mit einer Befestigungseinrichtung (3) zur Befestigung der Seiltrommel (2) an einer Welle (4),
- wobei die Seiltrommel (2) aus mehreren Teilschalen (2a,2b) besteht,
- wobei die Teilschalen (2a,2b) im zusammengesetzten Zustand eine Öffnung (5) zum Hindurchführen der Welle (4) ausbilden,
**dadurch gekennzeichnet,**
- **dass** die Befestigungseinrichtung (3) je Teilschale (2a,2b) an ihren beiden Seiten (2',2'') je ein Befestigungseinrichtungsteil (3a,3b) aufweist,
- **dass** jedes Befestigungseinrichtungsteil (3a,3b) mit einer der Teilschalen (2a,2b) verbunden ist,
- **dass** an jeder Seite (2',2") der Seiltrommel (2) mindestens zwei der Befestigungseinrichtungsteile (3a,3b) im zusammengesetzten Zustand der Teilschalen (2a,2b) miteinander verbunden sind und
- **dass** die Teilschalen (2a,2b) durch die Verbindung zwischen den Befestigungseinrichtungsteilen (3a,3b) lösbar miteinander verbunden sind.

2. Seilrollenvorrichtung (1) nach Anspruch 1, **dadurch gekennzeichnet, dass** die mehreren Teilschalen (2a,2b) zwei Halbschalen (2a,2b) sind.

3. Seilrollenvorrichtung (1) nach Anspruch 2, **dadurch gekennzeichnet, dass** die Befestigungseinrichtung (3) an jeder Seite (2',2") der Seiltrommel (2) zwei Befestigungseinrichtungsteile (3a,3b) aufweist, wobei jedes Befestigungseinrichtungsteil (3a,3b) mit einer der Halbschalen (2a,2b) verbunden ist.

4. Seilrollenvorrichtung (1) nach einem der vorangehenden Ansprüche, **dadurch gekennzeichnet, dass** an jeder Seite (2',2") der Seiltrommel (2) eines der Befestigungseinrichtungsteile (3a,3b) ein Befestigungsbügel (3a) ist, der insbesondere eine Innenweite hat, die das Hindurchführen einer Welle (4) erlaubt, die auch durch die Öffnung (5) hindurchgeführt werden kann, die von den Teilschalen (2a,2b) im zusammengesetzten Zustand gebildet wird.

5. Seilrollenvorrichtung (1) nach Anspruch 4, **dadurch gekennzeichnet, dass** je Befestigungsbügel (3a) ein damit korrespondierendes Gegenstück (3b) vorgesehen ist, das ein anderes der Befestigungseinrichtungsteile (3a,3b) bildet.

6. Seilrollenvorrichtung (1) nach Anspruch 5, **dadurch gekennzeichnet, dass** an jeder Seite (2',2") der Seilrolle (2) das den Befestigungsbügel (3a) bildende Befestigungseinrichtungsteil (3a) und das das korrespondierende Gegenstück (3b) bildende andere Befestigungseinrichtungsteil (3b) durch eine Verschraubung und/oder einen Bolzen (6) zusammengehalten werden.

7. Seilrollenvorrichtung (1) nach einem der Ansprüche 1 bis 3, **dadurch gekennzeichnet, dass**, insbesondere an jeder Seite (2',2") der Seilrolle (2), die Befestigungseinrichtung (3) einen Haltebügel (3c) und eine Gegenplatte (3d) aufweist, wobei der Haltebügel (3c) und die Gegenplatte (3d) die zusammengesetzten Befestigungseinrichtungsteile (3a,3b), insbesondere kraftschlüssig, zusammenhalten.

8. Seilrollenvorrichtung (1) nach Anspruch 7, **dadurch gekennzeichnet, dass** die Gegenplatte (3d) am Haltebügel (3c) angeschraubt ist.

9. Seilrollenvorrichtung (1) nach Anspruch 7 oder 8, **dadurch gekennzeichnet, dass** in und/oder auf den Befestigungseinrichtungsteilen (3a,3b) mindestens ein Vorsprung und/oder mindestens eine Vertiefung (9), insbesondere eine Nut (9), vorgesehen ist, die den Haltebügel (3c) und/oder die Gegenplatte (3d) aufnimmt.

10. Seilrollenvorrichtung (1) nach einem der vorangehenden Ansprüche, **dadurch gekennzeichnet, dass** die jeweilige Teilschale (2a,2b) und das damit verbundene Befestigungseinrichtungsteil (3a,3b) zusammen ein einstückiges Bauteil (7a,7b) bilden.

11. Seilrollenvorrichtung (1) nach Anspruch 10, **dadurch gekennzeichnet, dass** mehrere, insbesondere zwei, Bauteile (7a,7b) eine identische Form haben und insbesondere mit derselben Gussform hergestellt sind.

12. Seilrollenvorrichtung (1) nach einem der vorangehenden Ansprüche, **dadurch gekennzeichnet, dass** mindestens eines der Befestigungseinrichtungsteile (3a,3b), insbesondere mindestens eines der Befestigungseinrichtungsteile (3a,3b) an jeder Seite (2',2'') der Seiltrommel (2), ein Arretierungsmittel (8) zur axialen Fixierung der Seilrollenvorrichtung (1) an der Welle (4) aufweist.

13. Seilrollenvorrichtung (1) nach Anspruch 12, **dadurch gekennzeichnet, dass** das Arretierungsmittel (8) eine Schraube (8), insbesondere Schneidringschraube (8), ist, die sich vorzugsweise in radialer Richtung erstreckt.

14. Verbindungsanordnung
- mit einer Welle (4) und
- mit einer auf der Welle (4) befestigten Seilrollenvorrichtung (1) nach einem der vorangehenden Ansprüche.

15. Verfahren zur Herstellung einer Verbindungsanordnung enthaltend eine Welle (4) und eine Seilrollenvorrichtung (1), insbesondere eine Seilrollenvorrichtung (1) nach einem der Ansprüche 1 bis 13, **dadurch gekennzeichnet, dass** nacheinander die folgenden Schritte durchgeführt werden:
- Bereitstellen einer Welle (4),
- Platzieren mehrerer Teilschalen (2a,2b) mit jeweils einem Befestigungseinrichtungsteil (3a,3b) an jeder ihrer beiden Seiten (2',2'') um die Welle (4),
- Zusammensetzen der Teilschalen (2a,2b) zu einer Seiltrommel (2),
- lösbares Verbinden der Teilschalen (2a,2b) miteinander, indem zwischen den Befestigungseinrichtungsteilen (3a,3b) an jeder Seite (2',2'') der Seiltrommel (2) eine Verbindung erzeugt wird, und dadurch Bilden einer Seilrollenvorrichtung (1),
- axiales Fixieren der Seilrollenvorrichtung (1) an der Welle (4), indem eine Verbindung zwischen einem Arretierungsmittel (8) der Befestigungseinrichtung (3), die von den Befestigungseinrichtungsteilen (3a,3b) gebildet wird, und der Welle (4) erzeugt wird.

## Claims

1. Cable pulley device (1), in particular for a pull cable of an energy-saving or shading screen or a darkening system in a greenhouse,
- having a cable drum (2) for receiving and/or diverting a cable, and
- having an attachment device (3) for attaching the cable drum (2) to a shaft (4),
- wherein the cable drum (2) consists of a plurality of partial shells (2a, 2b),
- wherein the partial shells (2a, 2b) form, in the assembled state, an opening (5) for the passage of the shaft (4),
**characterised in that**
- the attachment device (3) comprises an attachment device part (3a, 3b) for each partial shell (2a, 2b) on the two sides (2', 2") thereof,
- each attachment device part (3a, 3b) is connected to one of the partial shells (2a, 2b),
- at least two of the attachment device parts (3a, 3b) are connected together on each side (2', 2") of the cable drum (2) when the partial shells (2a, 2b) are in the assembled state, and
- the partial shells (2a, 2b) are releasably connected together by the connection between the attachment device parts (3a, 3b).

2. Cable pulley device (1) as claimed in Claim 1, **characterised in that** the plurality of partial shells (2a, 2b) are two half-shells (2a, 2b).

3. Cable pulley device (1) as claimed in Claim 2, **characterised in that** the attachment device (3) comprises two attachment device parts (3a, 3b) on each side (2', 2") of the cable drum (2), wherein each attachment device part (3a, 3b) is connected to one of the half-shells (2a, 2b).

4. Cable pulley device (1) as claimed in any one of the preceding claims, **characterised in that** on each side (2', 2") of the cable drum (2) one of the attachment device parts (3a, 3b) is an attachment bracket (3a) which in particular has an inside width which permits passage of a shaft (4) which can also be passed through the opening (5) formed by the partial shells (2a, 2b) in the assembled state.

5. Cable pulley device (1) as claimed in Claim 4, **characterised in that** for each attachment bracket (3a) a counterpart (3b) corresponding thereto is provided and forms another one of the attachment device parts (3a, 3b).

6. Cable pulley device (1) as claimed in Claim 5, **characterised in that** on each side (2', 2") of the cable pulley (2) the attachment device part (3a) forming the attachment bracket (3a) and the other attachment device part (3b) forming the corresponding counterpart (3b) are held together by a screw connection and/or a bolt (6).

7. Cable pulley device (1) as claimed in any one of Claims 1 to 3, **characterised in that** in particular on each side (2', 2") of the cable pulley (2) the attachment device (3) comprises a holding bracket (3c) and a counter-plate (3d), wherein the holding bracket (3c) and the counter-plate (3d) hold together the assembled attachment device parts (3a, 3b), in particular in a non-positive manner.

8. Cable pulley device (1) as claimed in Claim 7, **characterised in that** the counter-plate (3d) is screwed onto the holding bracket (3c).

9. Cable pulley device (1) as claimed in Claim 7 or 8, **characterised in that** provided in and/or on the attachment device parts (3a, 3b) is/are at least one protrusion and/or at least one recess (9), in particular a groove (9), which receives the holding bracket (3c) and/or the counter-plate (3d).

10. Cable pulley device (1) as claimed in any one of the preceding claims, **characterised in that** the respective partial shell (2a, 2b) and the attachment device part (3a, 3b) connected thereto together form a single-piece component (7a, 7b).

11. Cable pulley device (1) as claimed in Claim 10, **characterised in that** a plurality of, in particular two, components (7a, 7b) have an identical shape and are produced in particular using the same casting mould.

12. Cable pulley device (1) as claimed in any one of the preceding claims, **characterised in that** at least one of the attachment device parts (3a, 3b), in particular at least one of the attachment device parts (3a, 3b) on each side (2', 2") of the cable drum (2), comprises a locking means (8) for axially fixing the cable pulley device (1) to the shaft (4).

13. Cable pulley device (1) as claimed in Claim 12, **characterised in that** the locking means (8) is a screw (8), in particular a compression ring screw (8), which preferably extends in the radial direction.

14. Connection arrangement
- having a shaft (4), and
- having a cable pulley device (1), as claimed in any one of the preceding claims, attached to the shaft (4).

15. Method for producing a connection arrangement containing a shaft (4) and a cable pulley device (1), in particular a cable pulley device (1) as claimed in any one of Claims 1 to 13, **characterised in that** the following steps are implemented consecutively:
- providing a shaft (4),
- placing a plurality of partial shells (2a, 2b), each having an attachment device part (3a, 3b) on each of the two sides (2', 2") thereof, about the shaft (4),
- assembling the partial shells (2a, 2b) to form a cable drum (2),
- releasably connecting the partial shells (2a, 2b) together, **in that** a connection is established between the attachment device parts (3a, 3b) on each side (2', 2") of the cable drum (2), and as a result forming a cable pulley device (1),
- axially fixing the cable pulley device (1) to the shaft (4), **in that** a connection is established between a locking means (8) of the attachment device (3), formed by the attachment device parts (3a, 3b), and the shaft (4).

## Revendications

1. Dispositif d'enroulement de câble (1), en particulier pour un câble de traction d'un écran d'ombrage ou écran thermique ou d'un dispositif d'occultation dans une serre, comprenant
- un tambour (2) pour l'enroulement et/ou le renvoi d'un câble et
- un organe (3) de fixation du tambour (2) sur un axe (4),
dans lequel le tambour (2) est constitué d'une pluralité de coques partielles (2a, 2b) qui, à l'état assemblé, forment une ouverture (5) pour le passage de l'axe (4), **caractérisé**
- **en ce que** l'organe de fixation (3) comporte, sur chacun des deux côtés (2', 2") de chaque coque partielle (2a, 2b), un élément de fixation (3a, 3b),
- **en ce que** chacun desdits éléments de fixation (3a, 3b) est relié à l'une des coques partielles (2a, 2b),
- **en ce que**, sur chacun des deux côtés (2', 2") du tambour (2), au moins deux desdits éléments de fixation (3a, 3b) sont, à l'état assemblé des coques partielles (2a, 2b), reliés entre eux, et
- **en ce que** lesdites coques partielles (2a, 2b) sont reliées amovibles entre elles, du fait de la liaison entre les éléments de fixation (3a, 3b).

2. Dispositif d'enroulement de câble (1) selon la revendication 1, **caractérisé en ce que** la pluralité de coques partielles (2a, 2b) est un ensemble de deux demi-coques (2a, 2b).

3. Dispositif d'enroulement de câble (1) selon la revendication 2, **caractérisé en ce que** l'organe de fixation (3) comporte, sur chacun des deux côtés (2', 2") du tambour (2), deux éléments de fixation (3a, 3b) dont chacun est relié à l'une des demi-coques (2a, 2b).

4. Dispositif d'enroulement de câble (1) selon l'une quelconque des revendications précédentes, **caractérisé en ce que**, sur chacun des deux côtés (2', 2") du tambour (2), l'un des éléments de fixation (3a, 3b) est un étrier (3a) dont notamment la portée intérieure autorise le passage d'un axe (4), axe qui par ailleurs peut passer dans l'ouverture (5) formée par les coques partielles (2a, 2b) à l'état assemblé.

5. Dispositif d'enroulement de câble (1) selon la revendication 4, **caractérisé en ce qu'**il est prévu, pour chaque étrier de fixation (3a), une pièce (3b) correspondante qui constitue un autre des éléments de fixation (3a, 3b).

6. Dispositif d'enroulement de câble (1) selon la revendication 5, **caractérisé en ce que**, sur chacun des deux côtés (2', 2") du tambour (2), l'élément de fixation (3a), autrement dit l'étrier (3a), et l'autre élément de fixation (3b), autrement dit la pièce correspondante (3b), sont maintenus ensemble par une vis et/ou un boulon (6).

7. Dispositif d'enroulement de câble (1) selon l'une quelconque des revendications 1 à 3, **caractérisé en ce que**, notamment sur chacun des deux côtés (2', 2") du tambour (2), l'organe de fixation (3) comporte un étrier (3c) et une contre-platine (3d), lesquels maintiennent réunis, en particulier grâce à une connexion par adhérence, les éléments de fixation (3a, 3b) assemblés.

8. Dispositif d'enroulement de câble (1) selon la revendication 7, **caractérisé en ce que** la contre-platine (3d) est vissée sur l'étrier (3c).

9. Dispositif d'enroulement de câble (1) selon la revendication 7 ou 8, **caractérisé en ce qu'**il est prévu, dans et/ou sur les éléments de fixation (3a, 3b), au moins une saillie et/ou au moins un creux (9), en particulier une rainure (9), dans lequel est logé l'étrier (3c) et/ou la contre-platine (3d).

10. Dispositif d'enroulement de câble (1) selon l'une quelconque des revendications précédentes, **caractérisé en ce que** chaque coque partielle (2a, 2b) forme, avec l'élément de fixation (3a, 3b) qui lui est adjoint, une pièce monobloc (7a, 7b).

11. Dispositif d'enroulement de câble (1) selon la revendication 10, **caractérisé en ce que** plusieurs pièces (7a, 7b), en particulier deux, ont une forme identique et sont fabriquées à l'aide d'un même moule.

12. Dispositif d'enroulement de câble (1) selon l'une quelconque des revendications précédentes, **caractérisé par** la présence, sur l'un au moins des éléments de fixation (3a, 3b), en particulier l'un au moins des éléments de fixation (3a, 3b) sur chacun des côtés (2', 2") du tambour (2), d'un moyen d'arrêt (8) pour bloquer axialement le dispositif d'enroulement de câble (1) sur l'axe (4).

13. Dispositif d'enroulement de câble (1) selon la revendication 12, **caractérisé en ce que** le moyen d'arrêt (8) est une vis (8), en particulier une vis à bague coupante (8) qui s'étend de préférence dans le sens radial.

14. Agencement de connexion comportant un axe (4) et, fixé sur ce dernier, un dispositif d'enroulement de câble (1) selon l'une quelconque des revendications précédentes.

15. Méthode de réalisation d'un agencement de connexion comportant un axe (4) et un dispositif d'enroulement de câble (1), en particulier un dispositif d'enroulement de câble (1) selon l'une quelconque des revendications 1 à 13, **caractérisée par** les étapes suivantes exécutées successivement :
- Approvisionnement d'un axe (4) ;
- Mise en place, autour de l'axe (4), de plusieurs coques partielles (2a, 2b) incluant chacune, sur chacun de ses deux côtés (2', 2"), un élément de fixation (3a, 3b) ;
- Assemblage des coques partielles (2a, 2b) pour former un tambour (2) ;
- Connexion amovible des coques partielles (2a, 2b) entre elles, en effectuant une jonction entre les éléments de fixation (3a, 3b) sur chacun des deux côtés (2', 2") du tambour (2) et réalisant ainsi un dispositif d'enroulement de câble (1) ;
- Fixation axiale du dispositif d'enroulement de câble (1) sur l'axe (4), en effectuant une jonction entre, d'une part, un moyen d'arrêt (8) présent sur l'organe de fixation (3) constitué des éléments de fixation (3a, 3b), et l'axe (4) d'autre part.
